# EUROPÄISCHE PATENTSCHRIFT

(11) **EP 1 190 418 B1**
(45) Veröffentlichungstag und Bekanntmachung des Hinweises auf die Patenterteilung: **23.04.2003**
(21) Anmeldenummer: 00935152.9
(22) Anmeldetag: 31.05.2000
(51) Int. Cl.: G11B 7/24, C09B 47/24, B41M 5/26, C09B 47/26

(54) **VERWENDUNG VON Cu-PHTHALOCYANINSULFONSÄUREAMIDEN ALS DYE FÜR EINMAL BESCHREIBBARE OPTISCHE DATENSPEICHER**
USE OF Cu-PHTHALOCYANINE SULFONAMIDES AS A DYE FOR WRITE-ONCE OPTICAL DATA STORAGE MEANS
UTILISATION D'AMIDES D'ACIDE SULFONIQUE DE Cu-PHTALOCYANINE COMME COLORANT POUR MEMOIRE DE DONNEES OPTIQUE ENREGISTRABLE UNE SEULE FOIS

(30) Priorität: 07.06.1999 DE 19925712
(43) Veröffentlichungstag der Anmeldung: 27.03.2002
(73) Patentinhaber: Bayer Aktiengesellschaft, 51368 Leverkusen (DE)
(72) Erfinder: BRUDER, Friedrich-Karl, D-47800 Krefeld (DE); RICHTER, Rolf, D-51373 Leverkusen (DE); HAESE, Wilfried, D-51519 Odenthal (DE); STAWITZ, Josef-Walter, D-51519 Odenthal (DE); VESPER, Reiner, D-42799 Leichlingen (DE); BERNETH, Horst, D-51373 Leverkusen (DE)
(86) Internationale Anmeldenummer: EP0004968
(87) Internationale Veröffentlichungsnummer: WO00075922

(56) Entgegenhaltungen:
- EP-A- 0 519 395
- DE-A- 4 310 917
- US-A- 4 379 710
- US-A- 5 489 330
- PATENT ABSTRACTS OF JAPAN vol. 17, no. 389, 21. Juli 1993 (1993-07-21) & JP 05 069673 A (TAIYO YUDEN), 23. März 1993 (1993-03-23)
- DATABASE WPI Section Ch, Week 198837 Derwent Publications Ltd., London, GB; Class E06, AN 1988-261810 XP002150757 & JP 63 191690 A (TOSHIBA), 9. August 1988 (1988-08-09)

## Beschreibung

Die vorliegende Erfindung bezieht sich auf einen einmal beschreibbaren optischen Datenträger unter Verwendung von Cu-Phthalocyaninsulfonsäureamiden als Farbstoff, insbesondere für CD-R, sowie die Applikation der oben genannten Farbstoffe auf ein Polymersubstrat (insbesondere Polycarbonat) durch Spin-Coating.

Die einmal beschreibbare Compact Disk (CD-R) erlebt in letzter Zeit ein enormes Mengenwachstum bei gleichzeitigem Preisverfall. Die Hauptkomponente der Herstellkosten stellt der informationstragende Farbstoff (Dye) dar. Stand der Technik ist die Verwendung von teuren, speziell für die spektralen Anforderungen und die Anforderungen an die Löslichkeit synthetisierten Cyanin-, Phthalocyanin- und Azofarbstoffsystemen.

In der Patentliteratur wird z.B. die Notwendigkeit zur Verwendung solch aufwendig modifizierter Phthalocyanin-Farbstoffe mit folgenden Argumenten begründet:
- Spezielle Substituenten verhindern die Bildung von Farbstoff-Assoziaten in dünnen Filmen. Assoziate verändern das Absorptionspektrum für Anwendungen als optischer Datenspeicher negativ (US 5124067).
- Spezielle Substituenten verhindern die Kristallisation der Farbstoffe in dünnen Filmen. Kristallite verändern die Schichthomogenität für die Anwendung als optischer Datenspeicher negativ ( EP-A2-519419).
- Nur spezielle Substituenten ermöglichen die Löslichkeit der allgemein schwer löslichen Phthalocyanine in solchen Lösungsmitteln, die bei der Applikation durch Spin-Coating auf ein Kunststoffsubstrat (vornehmlich Polycarbonat) die Groovestruktur des spritzgegossenen Kunststoffsubstrates nicht zerstören (US 5124067).
- Zentralatome mit großem Atomradius (Pd, Pt, Rh, Ru, In, VO) müssen verwendet werden, um einen möglichst hohen Brechungsindex bei der Schreib- und Lesewellenlänge (780- 820 nm) zu erreichen, was eine hohe Signalmodulation für die Anwendung als CD-R garantiert (EP-A1-0513370).
- Spezielle Substituenten und Zentralatome ermöglichen eine hohe molare Extinktion (>200000). Diese hohe molare Extinktion ist notwendig für eine der CD-R Spezifikation genügende hohe Modulation des Lesesignals (US 5124067).
- Das Patent EP-A1-519395 (Eastman Kodak Co.) beschreibt Metall-Phthalocyaninfarbstoffe mit bestimmten Sulfonamidgruppen (SO₂NR¹R²) fiir einmal beschreibbare optische Datenspeicher.
- Das Patent JP-A-05177946 (Taiyo Yuden) beschreibt bestimmte Sulfonamid-Derivate eines Zink-Phthalocyaninfarbstoffes als Informationsschicht für optische Datenspeicher. Der Farbstoff soll in Alkohol und Cellosolve löslich sein.

Derart hochspezialisierte Farbstoffsysteme sind teuer und verhindern daher eine preisgünstige Herstellung von z.B. einmal beschreibbaren Compact Disc's (CD-R).

Aufgabe der Erfindung ist demnach die Bereitstellung eines einfach zu synthetisierenden Phthalocyaninfarbstoffs, der die hohen Anforderungen (wie Lichtstabilität, günstiges Signal-Rausch-Verhältnis, schädigungsfreies Aufbringen auf das Substratmaterial, u.ä.) für die Verwendung als Informationsschicht in einem einmal beschreibbaren optischen Datenträger (vornehmlich CD-R) erfüllt. Dadurch könnte dieser Farbstoff deutlich billiger hergestellt werden und erlaubt daher eine kostengünstigere Herstellung.

Gegenstand der Erfindung ist daher ein einmal beschreibbarer optischer Datenträger enthaltend ein transparentes Kunststoffsubstrat auf dessen Oberfläche eine beschreibbare Informationsschicht und gegebenenfalls eine Reflektionsschicht aufgebracht ist, dadurch gekennzeichnet, dass in der beschreibbaren Informationsschicht mindestens ein Phthalocyaninfarbstoff der allgemeinen Formel I enthalten ist.

Gegenstand der Erfindung ist auch ein Verfahren zur Herstellung eines Formteils aus einem transparenten Substrat auf dessen Oberfläche eine beschreibbare Informations-schicht, enthaltend einen Farbstoff, aufgebracht wird, wobei der Farbstoff einen Phthalocyaninfarbstoff der allgemeinen Formel I enthält und mit einem Lösungsmittelgemisch gearbeitet wird.

Ein weiterer Gegenstand der Erfindung ist die Verwendung der Phthalocyaninfarbstoffe der Formel I, besonders Sulfonamidgruppen-haltigen Kupferphthalocyaninfarbstoffen der Formel I in optischen Datenträgern.

Die erfindungsgemäßen Phthalocyanin-Farbstoffe können nach folgender Formel (I) dargestellt werden: 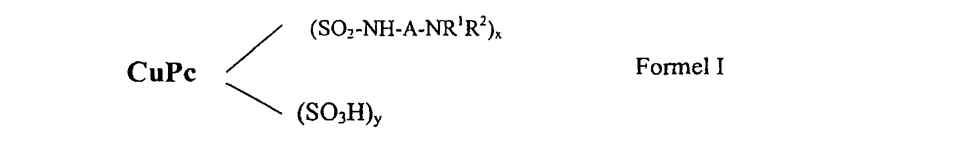 worin
- CuPc: für einen Kupferphthalocyanin-Rest steht,
- A: für ein gegebenenfalls substituiertes geradkettiges oder verzweigtes C₂ - C₆-Alkylen wie z.B. Ethylen, Propylen, Butylen, Pentylen, Hexylen steht,
- R¹ und R²: unabhängig voneinander für Wasserstoff oder jeweils gegebenenfalls substituiertes geradkettiges oder verzweigtes C₁ - C₆ - Alkyl wie z.B. Methyl, Ethyl, Propyl, Butyl, Pentyl, Hexyl, insbesondere für substituiertes C₁ - C₆ - Hydroxyalkyl sowie für unsubstituiertes C₁ - C₆-Alkyl stehen,
oder R¹ und R² zusammen mit dem N-Atom, an das sie gebunden sind, einen heterocyclischen 5- oder 6-Ring bilden, der gegebenenfalls ein weiteres Heteroatom, z.B. S, N oder O enthält,
- x: für 2,0 bis 4,0 steht,
- y: für 0 bis 1,5 steht und
die Summe von x und y 2,0 bis 4,0, bevorzugt 2,5 bis 4,0 beträgt.

Mischungen der oben genannten Farbstoffe können ebenfalls eingesetzt werden.

Die Herstellung des erfindungsgemäßen einmal beschreibbaren optischen Datenträgers wird durch Spin Coating des Farbstoffs selbst oder in Kombination mit anderen Farbstoffen oder mit geeigneten Lösungsmitteln auf ein transparentes Substrat erreicht. Für das Coating wird der Farbstoff mit oder ohne Additive in einem geeigneten Lösungsmittel oder Lösungsmittelgemisch gelöst, so dass der Farbstoff 100 oder weniger Gewichtsanteile auf 100 Gewichtsanteile Lösungsmittel ausmacht. Anschließend kann diese primäre Farbstofflösung mit einem weiteren geeigneten Lösungsmittel verdünnt werden, so dass der Farbstoff 20 oder weniger Gewichtsanteile auf 100 Gewichtsanteile Lösungsmittel ausmacht. Die beschreibbare Informationsschicht wird danach bei reduziertem Druck durch Sputtern oder Aufdampfen metallisiert und anschließend mit einem Schutzlack versehen.

Die Substrate können aus optisch transparenten Kunststoffen hergestellt sein, die, wenn notwendig, eine Oberflächenbehandlung erfahren haben. Bevorzugte Kunststoffe sind Polycarbonate und Polyacrylate, sowie Polycycloolefine.

Lösungsmittel bzw. Lösungsmittelgemische für das Aufcoaten des Farbstoffes werden einerseits nach ihrem Lösungsvermögen für den Farbstoff und andererseits nach einem minimalen Einfluss auf das Substrat ausgewählt. Lösungsmittel die ein gutes Lösungsvermögen für die erfindungsgemäßen Farbstoffe besitzen sind z.B. Benzylalkohol, essigsaures Wasser oder fluorierte Alkohole. Geeignete Lösungsmittel die einen geringen Einfluss auf das Substrat haben sind Alkohole, Ether, Kohlenwasserstoffe, halogenierte Kohlenwasserstoffe, Cellosolve, Ketone. Beispiele solcher Lösungsmittel sind Methanol, Ethanol, Propanol, 2,2,3,3-Tetrafluorpropanol, Diacetonalkohol, Tetrachloroethan, Dichlormethan, Diethylether, Dipropylether, Dibutylether, Methylcellosolve, Ethylcellosolve, 1-Methyl-2-propanol, Methylethylketon, 4-Hydroxy-4-methyl-2-pentanon, Hexan, Cyclohexan, Ethylcyclohexan, Oktan, Benzol, Toluol, Xylol. Bevorzugte Lösungsmittel sind Kohlenwasserstoffe und Alkohole, da sie den geringsten Einfluss auf das Substrat ausüben.

Besonders geeignet für die erfindungsgemäßen Farbstoffe sind Lösungsmittelgemische aus Benzylalkohol, essigsaurem Wasser oder fluorierten Alkoholen mit oben genannten Lösungsmitteln. Besonders bevorzugt ist dabei die Herstellung zunächst einer Lösung in Benzylakohol, essigsaurem Wasser oder fluorierten Alkoholen und anschließender Verdünnung mit einem der oben genannten Lösungsmittel.

Geeignete Additive für die beschreibbare Informationsschicht sind Stabilisatoren, Netzmittel, Binder, Verdünner und Sensibilisatoren.

Die Reflektionsschicht kann aus jedem Metall bzw. jeder Metallegierung, die üblicherweise für beschreibbare optische Datenträger benutzt werden, hergestellt sein. Geeignete Metalle bzw. Metalllegierungen können aufgedampft und gesputtert werden und enthalten z.B. Gold, Silber, Kupfer und deren Legierungen untereinander oder mit anderen Metallen.

Der Schutzlack über der Reflektionsschicht kann aus UV-härtenden Acrylaten bestehen.

Eine Zwischenschicht, die die Reflektionsschicht vor Oxidation schützt, kann ebenfalls vorhanden sein.

Der erfindungsgemäße beschreibbare optische Datenträger kann vorbeschriebene Read Only Memory (ROM) Bereiche enthalten, wie in US 4940618 (Taiyo Yuden) beschrieben. Die Oberfläche des Substrates kann eine separate, durch Wärme deformierbare Schicht enthalten, wie in US 4990388 (Taiyo Yuden) beschrieben.

### Beispiele

Die folgenden präparativen Beispiele zeigen die Herstellung der erfindungswesentlichen Farbstoffe.

### Beispiel 1

138 g Kupferphthalocyanin werden unter Rühren in 700 g Chlorsulfonsäure eingetragen. Die Mischung wird in 1 Stunde auf 136°C - 138°C erwärmt und 6 Stunden bei 136°C - 138°C gehalten. Man kühlt auf 85°C, lässt während 2 Stunden bei 85°C- 90°C 130 g Thionylchlorid zulaufen und rührt 4 Stunden bei 90°C nach. Nach Abkühlen auf 20°C- 30°C wird die Reaktionsmischung auf eine Mischung aus 1 l Wasser und 1 kg Eis ausgetragen. Durch Zugabe von Eis wird weiterhin bei ca. 0°C gehalten. Das ausgefällte Sulfochlorid wird abgesaugt, mit ca. 1 l Eiswasser gewaschen und trockengesaugt. Der feuchte Nutschkuchen (ca. 600 g) wird in ein Gemisch aus 250 ml Wasser und 250 g Eis eingetragen und bei 0°C mit 10 %iger Natronlauge auf einen pH-Wert von 7 gestellt. Dann lässt man 100 g 1-Amino-3-dimethylaminopropan zulaufen, wobei der pH-Wert auf ca. 10,5 steigt. Man lässt unter Erwärmen auf 20°C nachrühren, hält 1 Stunde bei 20°C, heizt auf 40°C und rührt 1 Stunde bei 40°C nach. Während der ganzen Zeit hält man mit 10 %iger Natronlauge den pH bei ca. 10. Man lässt auf Raumtemperatur abkühlen, stellt mit verdünnter Schwefelsäure auf pH 8,5, saugt ab, wäscht mit 11 Wasser in Portionen und trocknet bei 60°C - 80°C i. Vak.

Man erhält 269 g Farbstoff, der in Form seiner freien Säure der ungefähren Formel II entspricht.

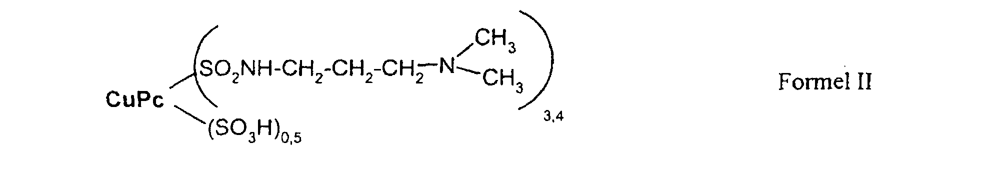

### Beispiel 2

138 g Kupferphthalocyanin werden unter Rühren in 560 g Chlorsulfonsäure eingetragen. Die Mischung wird in 1 Stunde auf 110°C - 112°C erwärmt und 5 Stunden bei 110°C - 112°C gehalten. Man kühlt auf 85°C, lässt während 2 Stunden bei 85°C - 90°C 85 g Thionylchlorid zulaufen und rührt 3 Stunden bei 90°C nach. Nach Abkühlen auf 20°C - 30°C wird die Reaktionsmischung auf eine Mischung aus 1 l Wasser und 1 kg Eis ausgetragen. Durch Zugabe von Eis wird weiterhin bei ca. 0°C gehalten. Das ausgefällte Sulfochlorid wird abgesaugt, mit ca. 1 l Eiswasser gewaschen und trockengesaugt. Der feuchte Nutschkuchen (ca. 740 g) wird in ein vorgelegtes Gemisch aus 840 ml Eiswasser und 160 g 1-Amino-3-dimethylaminopropan innerhalb von 1 Stunde unter Kühlen eingetragen. Die Temperatur darf dabei ansteigen und wird am Ende des Eintrages zunächst auf 40°C, dann auf 70°C angehoben. Man hält 1 Stunde bei 70°C, saugt ab, wäscht mit 1 l warmem Wasser in Portionen und trocknet bei 60°C - 80°C i. Vak.

Man erhält 252 g Farbstoff, der in Form seiner freien Säure der ungefähren Formel III entspricht.

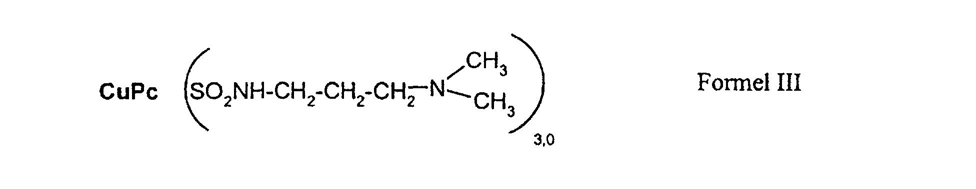

### Beispiel 3

138 g Kupferphthalocyanin werden 1 Stunde unter Rühren in 500 g Chlorsulfonsäure eingetragen. Die Mischung wird in 1 Stunde auf 100°C - 102°C erwärmt und 6 Stunden bei 100°C - 102°C gehalten. Man kühlt auf 80°C, lässt während 2 Stunden bei 80°C 150 g Thionylchlorid zulaufen und rührt 4 Stunden bei 80°C nach. Nach Abkühlen auf 20°C - 30°C wird die Reaktionsmischung auf eine Mischung aus 1 l Wasser und 1 kg Eis ausgetragen. Durch Zugabe von Eis wird weiterhin bei ca. 0°C gehalten. Das ausgefällte Sulfochlorid wird abgesaugt, mit ca. 1 l Eiswasser gewaschen und trockengesaugt. Der feuchte Nutschkuchen (ca. 600 g) wird in ein vorgelegtes Gemisch aus 700 ml Eiswasser und 160 g N-Methyl-N-(3-aminopropyl)-ethanolamin innerhalb von 1 Stunde unter Kühlen eingetragen. Die Temperatur darf dabei ansteigen und wird am Ende des Eintrages zunächst auf 40°C, dann auf 70°C angehoben. Man hält 1 Stunde bei 70°C, saugt ab, wäscht mit 1 l warmem Wasser in Portionen und trocknet bei 60°C - 80°C i. Vak.

Man erhält 256 g Farbstoff, der in Form seiner freien Säure der ungefähren Formel IV entspricht.

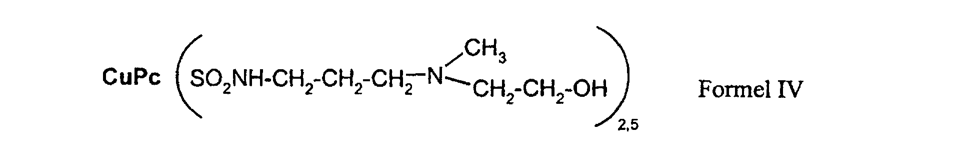

Die Substituenten garantieren eine Löslichkeit von über 50 % in Benzylakohol, sowie eine hohe Löslichkeit in essigsaurem Wasser.

Die folgenden Beispiele verdeutlichen die Erfindung weiter.

### Beispiel 4

Es wurde bei Raumtemperatur eine 37.5 % Lösung des Farbstoffes in Benzylakohol hergestellt. Diese Stammlösung wurde mit Diacetonalkohol auf eine 7.5 % Farbstofflösung verdünnt. Diese Lösung wurde mittels Spin Coating auf ein pregrooved Polycarbonat Substrat appliziert. Das pregrooved Polycarbonat wurde mittels Spritzguss als Disk hergestellt. Die Dimensionen der Disk und der Groovestruktur entsprachen denen, die üblicherweise für CD-R verwendet werden. Die Disk mit der Farbstoffschicht als Informationsträger wurde mit 100 nm Gold bedampft. Anschließend wurde ein UV-härtbarer Acryllack durch Spin Coating appliziert und mittels einer UV-Lampe ausgehärtet. Mit einem kommerziellen Testschreiber für CD-R (Pulstec OMT 2000 x 4) wurde z.B. bei 12 mW Schreibleistung und einfacher Schreibgeschwindigkeit (1.4 m/s) beim Auslesen der Information eine Modulationshöhe von 47 % (30 % bis 70 % ist CD-R Spezifikation) für das 3T Signal und 69 % (> 60 % ist CD-R Spezifikation) für das 11T Signal. Die Reflektivität im Groove und auf dem Land betrug vor dem Schreiben 72 % bzw. 75 %. Die Spezifikation für CD-R fordert > 65 %. Die molare Extinktion des Farbstoffs beträgt, gemessen in Benzylakohol, ca. 100 000 1/(mol cm) bei einem λₘₐₓ von 690 nm und ist damit deutlich niedriger als die in US 5124067 angegebene molare Extinktion von > 200000 1/(mol cm), die für einen Dye für optische Datenspeicher wünschenswert sein soll.

### Beispiel 5

Es wurde bei Raumtemperatur eine 37.5 % Lösung des Farbstoffes in Benzylakohol hergestellt. Diese Stammlösung wurde mit Diacetonalkohol auf eine 7.5 % Farbstofflösung verdünnt. Diese Lösung wurde mittels Spin Coating auf ein pregrooved Polycarbonat Substrat appliziert. Das pregrooved Polycarbonat wurde mittels Spritzguss als Disk hergestellt. Die Dimensionen der Disk und der Groovestruktur entsprachen denen die üblicherweise für CD-R verwendet werden. Die Disk mit der Farbstoffschicht als Informationsträger wurde mit 100 nm Silber bedampft. Anschließend wurde ein UV-härtbarer Acryllack durch Spin Coating appliziert und mittels einer UV-Larnpe ausgehärtet. Mit einem kommerziellen Testschreiber für CD-R (Pulstec OMT 2000 x 4) wurde z.B. bei 15 mW Schreibleistung und zweifacher Schreibgeschwindigkeit (2.8 m/s) beim Auslesen der Information eine Modulationshöhe von 41 % (30 % bis 70 % ist CD-R Spezifikation) für das 3T Signal und 71 % (> 60 % ist CD-R Spezifikation) für das 11T Signal. Die Reflektivität im Groove und auf dem Land betrug vor dem Schreiben 72 % bzw. 75 %. Die Spezifikation für CD-R fordert > 65 %. Die molare Extinktion des Farbstoffs beträgt, gemessen in Benzylakohol, ca. 100 000 1/(mol cm) bei einem λₘₐₓ von 690 nm und ist damit deutlich niedriger als die in US 5124067 angegebene molare Extinktion von > 200000 1/(mol cm), die für einen Dye für optische Datenspeicher wünschenswert sein soll.

## Patentansprüche

1. Optischer Datenträger enthaltend ein transparentes Substrat auf dessen Oberfläche eine beschreibbare Informationsschicht und gegebenenfalls eine Reflektionsschicht aufgebracht ist, **dadurch gekennzeichnet, dass** in der beschreibbaren Informationsschicht mindestens ein Phthalocyaninfarbstoff der allgemeinen Formel I enthalten ist 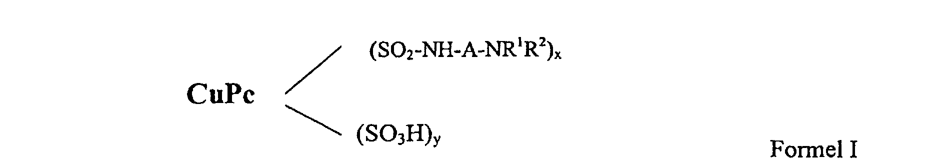 worin
CuPc für einen Kupferphthalocyanin-Rest steht,
A für ein gegebenenfalls substituiertes geradkettiges oder verzweigtes C₂ - C₆ - Alkylen steht,
R¹ und R² unabhängig voneinander für Wasserstoff oder jeweils gegebenenfalls substituiertes geradkettiges oder verzweigtes C₁ - C₆ - Alkyl, insbesondere für substituiertes C₁ - C₆- Hydroxyalkyl sowie für unsubstituiertes C₁ - C₆ - Alkyl stehen,
oder R¹ und R² zusammen mit dem N-Atom, an das sie gebunden sind, einen heterocyclischen 5- oder 6-Ring bilden, der gegebenenfalls ein weiteres Heteroatom, z.B. S, N oder O enthält,
x für 2,0 bis 4,0 steht,
y für 0 bis 1,5 steht und
die Summe von x und y 2,0 bis 4,0 beträgt.

2. Optische Datenträger gemäß Anspruch 1, **dadurch gekennzeichnet, dass** in der beschreibbaren Informationsschicht Mischungen von Phthalocyaninfarbstoffen der allgemeinen Formel (I) enthalten sind.

3. Verfahren zur Herstellung eines Formteils aus einem transparenten Substrat auf dessen Oberfläche eine beschreibbare Informationsschicht, enthaltend einen Farbstoff, aufgebracht wird, **dadurch gekennzeichnet, dass** der Farbstoff einen Phthalocyaninfarbstoff der allgemeinen Formel I enthält und mit einem Lösungsmittelgemisch gearbeitet wird

4. Verfahren nach Anspruch 3, **dadurch gekennzeichnet, dass** eine Komponente K1 des Lösungsmittelgemisches ausgewählt ist aus der Gruppe Benzylalkohol, essigsaurem Wasser oder fluorieren Alkoholen, bevorzugt 2,2,3,3,-Tetrafluorpropanol.

5. Verfahren nach Anspruch 3, **dadurch gekennzeichnet, dass** in einem ersten Schritt der Farbstoff in Komponente K1 gelöst wird und in einem zweiten Schritt diese Lösung mit einer anderen Komponente K2 verdünnt wird, die ausgewählt ist aus der Gruppe gebildet von Alkoholen, Ether, Kohlenwasserstoffen, halogenierten Kohlenwasserstoffen, Cellosolve, Ketonen, bevorzugt ausgewählt aus der Gruppe gebildet von Methanol, Ethanol, Propanol, 2,2,3,3-Tetrafluorpropanol, Diacetonalkohol, Tetrachloroethan, Dichlormethan, Diethylether, Dipropylether, Dibutylether, Methylcellosolve, Ethylcellosolve, 1-Methyl-2-propanol, Methylethylketon, 4-Hydroxy-4-methyl-2-pentanon, Hexan, Cyclohexan, Ethylcyclohexan, Oktan, Benzol, Toluol, Xylol.

6. Verfahren nach einem der Ansprüche 3 und 4, **dadurch gekennzeichnet, dass** die den Farbstoff enthaltende Informationsschicht durch Spin-Coating aufgebracht wird.

7. Verwendung von Sulfonsäureamidgruppen-haltigen Kupferphthalocyaninfarbstoffen der Formel I für optische Datenspeicher .

## Claims

1. An optical data carrier containing a transparent substrate to the surface of which is applied a writable information layer and optionally a reflection layer, **characterised in that** the writable information layer contains at least one phthalocyanine dye of the general formula I, 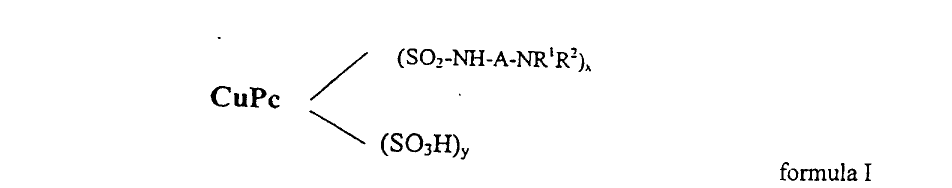 in which
CuPc represents a copper phthalocyanine group,
A represents an optionally substituted straight chain or branched C₂-C₆ alkylene,
R¹ and R², independently, represent hydrogen or each optionally represent a substituted straight chain or branched C₁-C₆ alkyl, in particular a substituted C₁-C₆ hydroxyalkyl group as well as an unsubstituted C₁-C₆ alkyl group,
or R¹ and R², together with the nitrogen atom to which they are bonded, form a heterocyclic 5- or 6-membered ring which optionally contains another heteroatom, e.g. S, N or O,
x is 2.0 to 4.0,
y is 0 to 1.5 and
the sum of x and y is 2.0 to 4.0.

2. An optical data carrier in accordance with Claim 1, **characterised in that** mixtures of phthalocyanine dyes of the general formula (I) are present in the writable information layer.

3. A process for producing a moulded part consisting of a transparent substrate to the surface of which is applied a writable information layer containing a dye, **characterised in that** the dye contains a phthalocyanine dye of the general formula I and is worked up using a solvent mixture.

4. A process according to Claim 3, **characterised in that** one component K1 in the solvent mixture is chosen from the group comprising benzyl alcohol, water acidified with acetic acid or fluorinated alcohols, preferably 2,2,3,3-tetrafluoropropanol.

5. A process according to Claim 3, **characterised in that** in a first step the dye is dissolved in component K1 and in a second step this solution is diluted with another component K2 which is chosen from the group formed by alcohols, ethers, hydrocarbons, halogenated hydrocarbons, Cellosolve, ketones, preferably chosen from the group formed by methanol, ethanol, propanol, 2,2,3,3-tetrafluoropropanol, diacetone alcohol, tetrachloroethane, dichloromethane, diethyl ether, dipropyl ether, dibutyl ether, methylcellosolve, ethylcellosolve, 1-methyl-2-propanol, methylethyl ketone, 4-hydroxy-4-methyl-2-pentanone, hexane, cyclohexane, ethylcyclohexane, octane, benzene, toluene, xylene.

6. A process according to one of Claims 3 and 4, **characterised in that** the information layer which contains the dye is applied by spin-coating.

7. Use of sulfonamide group-containing copper phthalocyanine dyes of the formula I for optical data storage.

## Revendications

1. Support de données optiques, contenant un substrat transparent, sur la surface duquel est appliquée une couche d'information inscriptible et le cas échéant, une couche de réflexion, **caractérisé en ce que** la couche d'information contient au moins un colorant phtalocyanine de la formule générale I : 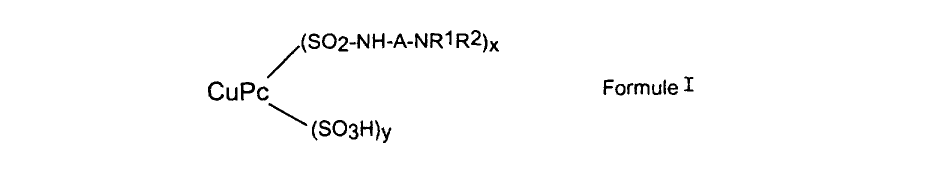 où
CuPc représente un reste phtalocyanine de cuivre,
A représente un radical alcoylène en C₂-C₆ linéaire ou ramifié, le cas échéant substitué ;
R¹ et R² représentent indépendamment l'un de l'autre, l'atome d'hydrogène ou un radical alcoyle en C₁-C₆ linéaire ou ramifié, le cas échéant substitué, en particulier un radical hydroxyalcoyle en C₁-C₆ substitué ainsi qu'un radical alcoyle en C₁-C₆ non substitué, ou
R¹ et R² forment avec l'atome N sur lequel ils sont liés, un hétérocycle à 5 ou 6 membres, qui contient le cas échéant, un autre hétéroatome, par exemple S, N ou O ;
x représente 2,0 à 4,0 ;
y représente 0 à 1,5, et
la somme de x et y se situe dans l'intervalle allant de 2,0 à 4,0.

2. Support de données optiques suivant la revendication 1, **caractérisé en ce que** dans la couche d'information inscriptible, sont présents des mélanges de colorants phtalocyanine de la formule générale (I).

3. Procédé de préparation d'un article moulé constitué d'un substrat transparent, sur la surface duquel est appliquée une couche d'information inscriptible, contenant un colorant, **caractérisé en ce que** le colorant contient une phtalocyanine de la formule générale I et est travaillé avec au moins un mélange de solvants.

4. Procédé suivant la revendication 3, **caractérisé en ce qu'**un composant C1 du mélange de solvants est choisi parmi le groupe du benzylalcool, de l'eau acidifiée par l'acide acétique ou des alcools fluorés, de préférence le 2,2,3,3-tétrafluoropropanol.

5. Procédé suivant la revendication 3, **caractérisé en ce que** dans une première étape, on dissout le colorant dans le composant C1 et dans une deuxième étape, cette solution est diluée avec µn autre composant C2, qui est choisi parmi le groupe formé des alcools, des éthers, des hydrocarbures, des hydrocarbures halogénés, du cellosolve, des cétones, de préférence choisi parmi le groupe formé du méthanol, de l'éthanol, du propanol, du 2,2,3,3-tétrafluoropropanol, du diacétonalcool, du tétrachloroéthane, du dichlorométhane, du diéthyléther, du dipropyléther, du dibutyléther, du méthylcellosolve, de l'éthylcellosolve, du 1-méthyl-2-propanol, de la méthyléthylcétone, de la 4-hydroxy-4-méthyl-2-pentanone, de l'hexane, du cyclohexane, de l'éthylcyclohexane, de l'octane, du benzène, du toluène, du xylène.

6. Procédé suivant l'une quelconque des revendications 3 et 4, **caractérisé en ce que** la couche d'information contenant le colorant est appliquée par revêtement par centrifugation.

7. Utilisation de colorants phtalocyanine de cuivre contenant des radicaux sulfonamide de la formule I pour des mémoires de données optiques.
